# EUROPEAN PATENT APPLICATION

(11) **EP 4 686 499 A1**
(43) Date of publication of application: **04.02.2026**
(21) Application number: 25193050.9
(22) Date of filing: 31.07.2025
(51) Int. Cl.: A63F 13/52, A63F 13/35, A63F 13/69, G06T 17/05

(54) **ASSET STREAMING SYSTEM AND METHOD**

(30) Priority: 31.07.2024 GB 202411258
(71) Applicant: Sony Interactive Entertainment Inc., Tokyo 108-0075 (JP)
(72) Inventor: DIXON, Alex, London, W1F 7LP (GB)
(74) Representative: Fish & Richardson P.C.

(57) **Abstract**

A system for executing a video game, the system comprising a processing unit configured to execute the video game on the basis of executable code and a first package of assets, the first package of assets comprising a plurality of assets for the video game at a first level of detail, a detail determining unit configured to determine, in dependence upon a first image frame of the video game rendered by the processing unit, a target level of detail for one or more assets in the first package of assets, and an asset obtaining unit configured to obtain one or more assets at a second level of detail in dependence upon the determined target level of detail for respective assets, wherein the processing unit is configured to execute the video game using the obtained assets instead of the corresponding assets in the first package of assets when rendering image frames following the first image frame.

## Description

### BACKGROUND OF THE INVENTION

### Field of the Invention

This disclosure relates to an asset streaming system and method.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly nor impliedly admitted as prior art against the present invention.

With the increasing level of complexity and visual quality that are able to be provided in games, the demands upon processing hardware have increased significantly over time. For instance, more powerful processing hardware may be required to execute games, and an increased battery life to support the use of this in portable devices. Similarly, increasingly large storage devices can be required to enable the storage of several such games locally (or even a single game, with some games having storage requirements exceeding the storage capacity of some devices).

One approach that has been offered to address these issues for users is that of cloud-based gaming arrangements. In such arrangements, games are executed remotely at a server with the results of the execution (such as a video of the rendered gameplay) being streamed to the user via an internet connection. By executing the game remotely, the processing and storage burden is substantially passed from the user's local device to a remote server - enabling low-capability devices to access content requiring more capable devices for execution.

Whilst this approach can address a number of issues encountered by a user, cloud-based gaming can bring its own problems. For instance, a user's internet connection may be limited (such as a mobile network connection) so as to cause a significant degree of latency to be experienced - meaning that a user's inputs are not able to be as responsive as may be desired. Further to this, poor network conditions can lead to latency spikes or the like which can be detrimental to the user experience - this can delay frames from being delivered to the user's device, or cause inputs to be delayed in reaching the server, in an inconsistent manner. This can amplify those problems further, and can in some cases make the game become unplayable for a user. Video compressions artefacts may also be introduced due to video compression, which can degrade the visual quality of the content being interacted with by the user.

It is therefore considered that a system and method for providing a game to a user which addresses the disadvantages of each of these approaches is desirable.

It is in the context of the above discussion that the present disclosure arises.

### SUMMARY OF THE INVENTION

This disclosure is defined by claim 1. Further respective aspects and features of the disclosure are defined in the appended claims.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 schematically illustrates an entertainment system;
Figure 2 schematically illustrates a networked system;
Figure 3 schematically illustrates a game execution method;
Figure 4 schematically illustrates an example of a rendering process which may be used in accordance with the method of Figure 3;
Figure 5 schematically illustrates a selection algorithm;
Figure 6 schematically illustrates a system for executing a video game; and
Figure 7 schematically illustrates a method for executing a video game.

### DESCRIPTION OF THE EMBODIMENTS

Referring now to the drawings, wherein like reference numerals designate identical or corresponding parts throughout the several views, embodiments of the present disclosure are described.

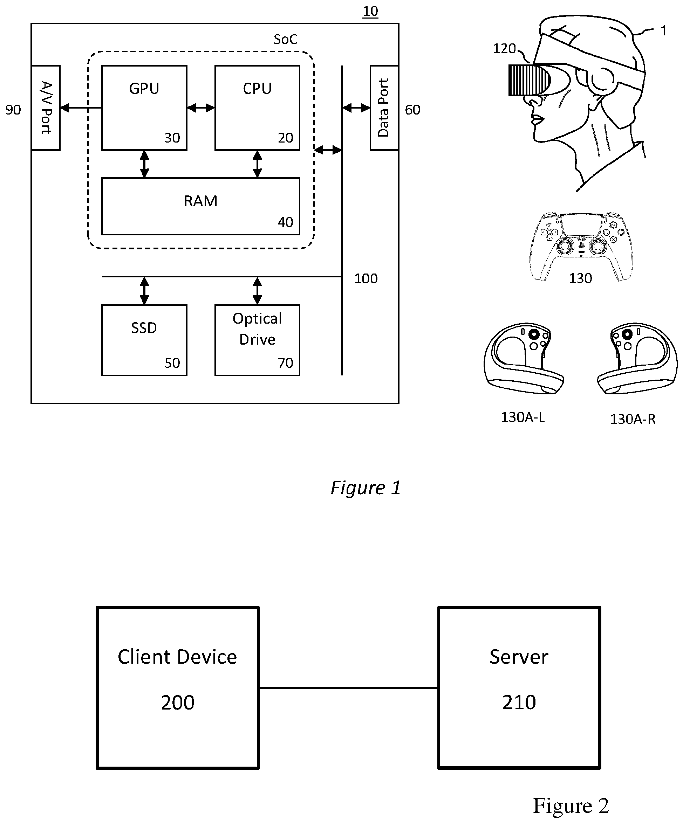

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1.

Interaction with the system is typically provided using one or more handheld controllers 130, and/or one or more VR controllers (130A-L,R) in the case of the HMD.

Figure 2 schematically illustrates a networked system in accordance with implementations of the present disclosure. In this Figure, a single client device 200 is shown in communication via a network (represented by the line) with a server 210. Of course, in practice a plurality of client devices may be in communication with a single server, and a client device may be in communication with multiple servers at the same time. While referred to here as a 'server', the unit 210 may be any suitable processing device which is configured to provide requested game assets or other files associated with games to another device via a network or internet connection.

The client device 200 may be implemented as an entertainment device 100 as shown in Figure 1, for example, or any other processing hardware. Examples of client devices include games consoles, mobile phones, other portable processing devices, computers, televisions, and laptops.

The server 210 may be implemented using any suitable processing hardware, and may include any suitable configuration of CPUs and/or GPUs required to implement a content distribution method. Of course, the server 210 should also include communication means to enable communication with the client device 200 over the network connection. Rather than a single server being referenced, in some cases it may be considered advantageous to utilise edge servers to enable latency reduction when distributing content.

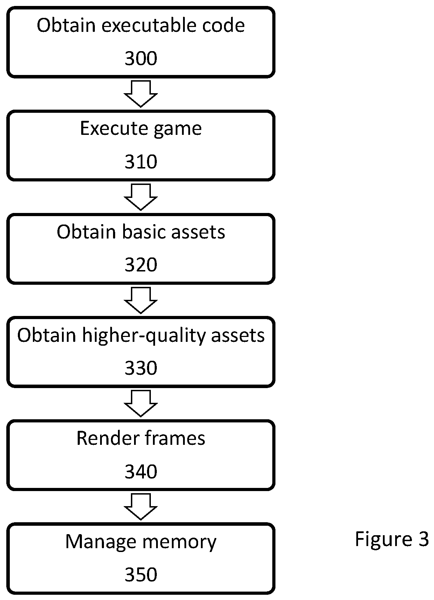

Implementations according to the present disclosure provide an arrangement in which locally-executed games utilise asset streaming from a content distribution server. The streamed high-quality assets are stored at the client device on a temporary basis, thereby relieving a storage burden associated with the game; by executing the game locally, it is also envisaged that latency issues associated with cloud gaming arrangements can be mitigated. Figure 3 schematically illustrates an exemplary method in accordance with this disclosure.

A step 300 comprises obtaining executable code associated with a video game; this may be as part of a package comprising core assets (that is, those which are considered to be essential to the game) such as graphics for displaying the main menu, a launcher, and/or an initial loading screen. Such a package may be on the order of 100Mb, for example, rather than the order of 10Gb or 100Gb as may be more common for large-scale games. This can be downloaded from an online store, for example, or be provided on physical media as appropriate.

A step 310 comprises executing the game on the basis of the content obtained in step 300, and optionally an initial set of assets which is obtained (see step 320) prior to execution. However in the case that an initial set of assets is not obtained prior to execution, execution of the game may lead a user to a loading screen or the like while the obtaining in step 320 is performed.

A step 320 comprises obtaining a basic version of assets which are predicted to be used by the game within a predetermined period (such as a given amount of time, within the current or next level, or before the next loading screen). Such assets comprise data such as texture and audio at a quality which is deemed to be acceptable (although not necessarily desirable). For instance, this may include reduced-quality textures which occupy a fraction of the memory of the original texture. This step may be performed as part of a loading screen between levels or during the initiation of the game, for example, in response to an in-game trigger (such as approaching a passage to a new area), or may be performed as a continuous process alongside gameplay.

A step 330 comprises, during gameplay, obtaining higher-quality versions of one or more of the assets obtained in step 320. These assets are obtained in response to an indication that the asset is to be used during execution of the video game; indications include information output by the game (for instance, in response to a user entering an area which is associated with a particular object and corresponding texture), display of an asset which meets a particular threshold (such as a threshold display size), or any other indication. In some cases, the indication may be a request by the GPU for a particular level of detail (LOD) during rendering.

When obtained, these higher-quality versions can replace the basic versions which were already stored. Alternatively, they may be stored alongside them so that the basic versions can be retained for future use once the higher-quality versions have been removed from local storage.

A step 340 comprises rendering one or more frames using the obtained higher-quality versions of the assets; while these assets are typically not made available for a frame being rendered (upon which the indication is typically based) due to the latency in obtaining the assets from the server, these can be used in place of the basic version of the assets when rendering future frames. As such, no latency in rendering the current frame is introduced due to requesting a higher-quality version of an asset to be used in rendering.

In implementations of the present disclosure it is considered that no modification to the executable code is required to enable use of the obtained higher-quality versions of the assets. This is because the code is written so as to reference the same top-level asset, independent of the desired level of detail (or even platform on which the code is to be executed, in some cases). Therefore the code is configured to reference the same asset independent of its quality. Of course, in some implementations it may be preferable that a more dynamic code is used in which the references to assets are updated or otherwise mapped (for instance, by an intermediate lookup table) so as to reference specific formats or levels of detail for an asset.

A step 350 comprises performing a memory management process which selectively removes higher-quality assets from local storage when appropriate - such as when no longer being displayed, or when display is likely to only require the use of lower-quality assets in future (such as when moving away from an object, thereby reducing its screen size).

Steps 330-350 may be performed in a continuous manner, such that during the user's gameplay higher-quality assets are constantly being obtained, used, and removed where appropriate. In some cases the same asset may be obtained several times at differing levels of detail in dependence upon the requested LOD; for instance, to enable an improved smoothing when switching between a low-quality and a high-quality representation by using intermediate-quality assets in between.

A content distribution server (or server arrangement, comprising multiple storage and/or edge servers for instance) that is used as the source of higher-quality assets may be configured in any suitable manner that enables these assets to be distributed in a timely manner. The specific manner in which content is stored may be determined freely, with an example of such a manner of storage being discussed here for clarity rather than as a limiting example.

In an exemplary content distribution arrangement, the executable code (and any associated assets as discussed with reference to step 300 of Figure 3) is distributed by an online store appropriate for a given platform, such as one associated with a particular games console. This code is decoupled from the game assets themselves (aside from those which are associated with the code, such as assets for generating a main menu for a game), with the assets being stored at a server which is separate to those stores. While the executable code may be different in each case, due to being for use with different processing hardware, the assets which are referred to by the code are the same (albeit in a different format where appropriate). A single server storing the assets can therefore service games being executed on a range of different platforms.

The server acting as an asset repository may be configured to store the assets in any suitable manner; in a preferred implementation the server stores assets in a range of formats and qualities (such as different levels of detail for texture content). It is envisaged that a top-level version of each asset is stored which is at a highest level of quality amongst the versions of that asset; this may be a level of quality which is not actually used, but may be a suitable basis for downsampling (to generate lower-quality assets for use) or may be provided for use by any future platforms. Such a top-level asset may be a texture provided with an 8K or 16K resolution, for instance, whilst platforms may only use up to 4K resolution.

From this top-level asset, a corresponding set of sub-level assets can be generated which represent the same asset at lower quality. For instance, an 8K or 16K image or video may be downsampled to generate 4K, 2K, and lower-resolution equivalents - an exemplary lowest-level may comprise textures stored with a size of 64kb, for instance. Audio assets may be similarly downsampled to reduce their bit rate, for example, whilst meshes may be modified so as to reduce their size (for instance, by reducing the number of vertices in the mesh). Bounding volume hierarchies may also be provided in a manner which reduces their size; such as a hierarchy having fewer levels or nodes. Such a downsampling may be performed using an automated process at the server, for example, or the sub-level assets may be provided by a content creator that has performed the process manually or in an automated fashion in advance of assets being provided to the server.

A set of sub-level assets may be generated in a platform agnostic manner, such that any execution of a game can make use of the same assets; however in some cases it may be preferred that (alternatively, or in addition) a separate set of sub-level assets is generated for each of a plurality of specific platforms (or groups of platforms, such as those from the same manufacturer). These assets may be in a preferred file format for that platform, for example, or comprise different levels of quality which are considered to be more appropriate for that platform. For instance, an older platform may be associated with lower levels of detail due to having lower available processing power for generating images using assets. When a request for an asset is received, the server is able to distribute assets which are specific to the platform of the requesting device in these implementations.

It is considered that the lowest levels of the sub-level assets represent the 'basic version' referred to in step 320 of Figure 3; these are typically the assets which are obtained for initial use by an application (although in some cases higher-level assets may be obtained in preference to these, as discussed below). The lowest levels of respective assets may each be the same level of quality (such as the same resolution, or same bitrate), however it is also considered that in some cases it may be preferred that the lowest level of quality is higher for some assets than others. This may be due to prominence within content, for example; in the case that an asset is always used and typically appears frequently and in a prominent manner, a higher level of quality may be set as the lowest-level than for an asset which is only encountered by some players and is often in a more peripheral part of the display.

Of course, such a storage arrangement for assets is entirely exemplary; in some cases online stores may be associated with asset storage servers that are platform specific, and these can be used to store sub-level assets for that platform only rather than providing a more platform-agnostic server as described above. It is also considered that asset storage servers may be configured in different manners based upon the content; in some cases a content creator or publisher can provide a server which provides assets for each of their games, or game-specific asset servers may be utilised. In other words, the specific manner in which the assets are stored is able to be determined freely, with the condition that specific assets and specific levels of detail (levels of quality) are able to be obtained by a content executing device.

While many assets are obtained on an individual basis, the basic asset packages comprise predefined sets of assets. Of course, rather than being a pre-generated package which is stored as a single item this could be implemented as the package being a list which identifies assets that should be obtained. These basic sets of assets can be defined manually by a content creator, for example, or may be automatically generated by a trained machine learning model based upon information obtained from the rendering process (such as requested level of detail information and asset usage information) or videos of gameplay. Such packages need not be static, of course, and can be updated freely in response to more information about asset use being obtained.

In a typical implementation, a basic asset package for a given portion of a game (such as a particular location in the game environment, or a stage within the game) comprises every asset that could be required within that portion at the lowest available level of detail (or at least a low level which is considered appropriate for a given device executing the game). This can be modified however such that some assets are obtained at a higher level of detail as the basic level. For instance, if there is an object which is definitely going to be displayed in a prominent manner (such as the door into a room containing the boss for a stage of the game) should they progress within the game then a higher level of detail may be defined to start with so as to remove the need to obtain this later. Rather than the predicted desired level of detail being obtained, an intermediate level may be obtained so as to balance the initial package size with initial display quality.

As such, it is considered that the initial or basic asset package can be defined in any suitable manner for given content - where considered appropriate, levels of detail above the initial levels may be defined as a part of the package.

Of course, multiple packages may reference the same assets should they be reused between different portions of a game; in such cases it may be preferred that the packages are lists referencing assets to be obtained, so as to reduce duplication of assets in pre-generated asset packages on the asset storage server.

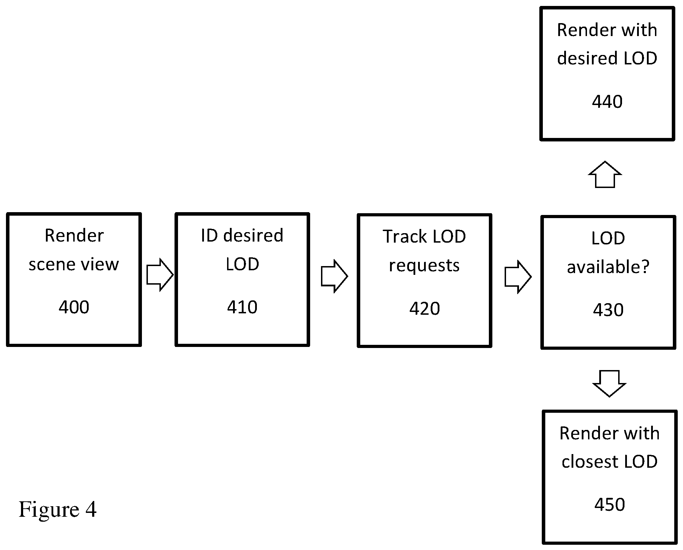

Figure 4 schematically illustrates a more detailed example of a rendering process which may be used in accordance with the method of Figure 3. In this process, a first frame is rendered at step 400 using available assets and in dependence upon this frame higher-quality versions of assets are obtained for use in rendering a later frame. Any frames rendered in the meantime will also use the available assets, thereby avoiding introducing a rendering latency due to obtaining the higher-quality versions of assets from the asset repository.

A step 400 comprises rendering a view of a scene in a video game which is being executed; this view is rendered on the basis of locally available assets at the content executing device (such as a games console). For instance, these may be the basic assets which were obtained during initiation of the content or at the start of a given level or other segment of a game; this may also include any higher-level-of-detail assets which have already been obtained in response to rendering earlier frames.

A step 410 comprises identifying a desired level of detail or level of quality for each of one or more assets in dependence upon the rendered view in step 400. The desired level of detail can be identified in accordance with any suitable scheme; in one example this is on the basis of an occupied screen size of a visual asset. In this manner, an object which occupies a larger amount of the screen is considered to be more prominent and therefore should be associated with higher-quality assets - and therefore related assets (such as textures, meshes, and associated audio) can be considered desirable given the prominence. In some instances, the GPU or a process associated with the rendering may be configured to identify an appropriate level of detail for an asset as a part of a standard rendering process.

Alternatively, or in addition, factors may be considered such as motion of an object, context (such as if an object is associated with an objective or is expected to be interacted with), predictions regarding whether the object will become more prominent (such as if it is moving towards a user, and therefore will come to occupy a larger screen size), and predefined information relating to the significance of an object or user preferences. Any of these, or other, factors may be used to determine a prominence and/or significance of an object within the rendered view, and to determine a desired level of detail on this basis. Such analyses may be object-specific, such that different objects have different weightings and the like, or the same considerations may be used for all assets as appropriate.

A step 420 comprises tracking the level of detail identification results for each asset in step 410, with the highest level of detail identified for each asset being recorded. Based upon the highest level of detail that has been identified, assets are requested from the asset repository server. While in some cases an asset is requested for that highest level, in some cases an intermediate level of detail between that and the basic or otherwise available asset may be requested as appropriate. Such information may be stored in a local lookup table or the like which collates information for each asset; information may also be stored which indicates the timing of these results, so as to indicate how recently a higher level of detail has been identified as being desired. In some cases such information may instead be stored in metadata associated with each asset, rather than in a more general data structure which relates to a number of different assets.

At a step 430, a determination of whether assets having the desired level of detail are locally available to the content executing device is made. Such a determination may be made on the basis of the stored information discussed with reference to step 420, for example, in addition to information indicating which level of detail version of an asset is currently stored.

At a step 440, should the assets having the desired level of detail be available, a new image frame is rendered using the assets having the desired level of detail. At a step 450, should the assets having the desired level of detail not be available, a new image frame is rendered instead using the assets having the closest level of detail to that which is desired amongst the one or more that are locally available.

Of course, in some cases it may be that a new image frame is rendered using a mixture of assets having the desired level of detail and assets having an intermediate (or low) level of detail; this may be due to different assets being received at different times, due to obtaining them one after another (rather than in parallel) and/or due to size differences between the assets, for instance. In other words, the process described with reference to Figure 4 may be considered on a per-asset basis

In some cases, it may be considered advantageous that versions of an asset having intermediate levels of detail are obtained rather than versions having the desired level of detail so as to introduce the higher level of detail more gradually. This can reduce the 'popping' effect that may be observed when the level of detail changes abruptly in an image. In this manner, the desired level of detail can be obtained in an iterative manner with successively higher levels of detail being obtained sequentially.

Alternatively, or in addition, rendering may be performed on the basis of a blended or interpolated asset - that is, a version of the asset which is generated on the basis of the basic asset that was originally obtained and a higher-quality version which was obtained later. Similarly, an asset may be downsampled (or otherwise rendered in a lower-quality manner) locally so as to aid the transition to higher-quality asset presentation.

Implementations according to the present disclosure may handle asset storage in a dynamic manner, with memory management being an active process. While it is possible that each obtained asset version is assigned to a given location and the executable code is updated (or a pointer generated, for example) to locate this for use in the rendering process, in some cases it is preferred that a virtual memory range is utilised. This, and the management of obtained assets over time, are discussed below in more detail; while in some cases this may not be necessary, due to local storage being high capacity, in some cases memory usage may need to be managed actively.

In order to aid this, a virtual address space may be utilised in implementations according to the present disclosure. This virtual address space comprises memory addresses and ranges for all assets associated with given content, whether they are available locally or not, at each level of detail that could be available; as such, the virtual address space may be larger than the physical memory available locally to a processing device. During execution of a game, the game references this virtual address space when obtaining assets for use in rendering; this means that the game code can be left unchanged despite the location of assets within physical memory not being fixed or predetermined.

To enable the assets to be successfully retrieved by the game during execution, a mapping between the virtual address space and the physical address space (that is, the physical memory locations). This mapping can be managed dynamically, with the mapping being updated as each asset is retrieved (so as to link the existing virtual address to a physical address) or deleted (so as to unlink the physical address from the virtual address). This mapping may be stored in any suitable manner, and may be handled by a memory management process separate to the game, such as a system-level memory management.

The virtual addresses can be managed in a number of different ways; for instance, in some cases a virtual memory address may be assigned to each level of detail associated with each asset, such that the executable code can call each of these individually. Alternatively, a single virtual address may be provided for an asset, such that the executable code can consult the same virtual address independent of the level of detail. In this case, the mapping between virtual and physical memory addresses is used to map the virtual address to the available level of detail representation of the asset.

Deletion of files can be performed in accordance with any suitable conditions as appropriate for a given implementation. In some cases, the time of access for assets may be tracked, with assets that have not been accessed for a threshold amount of time being marked for deletion. Assets may also (or instead) be deleted when the game progresses to a new stage or portion, with each of the assets (or at least those not indicated as being used in the next stage, for instance identified by comparing the contents of the asset packages for the respective stages) associated with the old stage being deleted. Similarly, assets may be deleted when the user terminates gameplay. In any case, the conditions may be modified in dependence upon properties of the asset itself, such as an assigned importance, file size, and difference in file size between the stored level of detail and the basic level. Assets can also be deleted in response to the local storage space becoming increasingly full; in response to this, high-quality assets can be replaced with lower-quality assets.

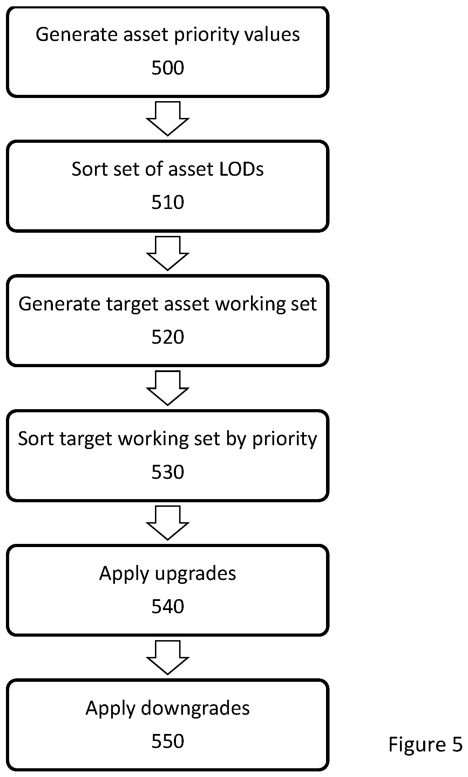

Figure 5 schematically illustrates a selection algorithm which may be used to identify an appropriate level of detail to request (a target level of detail) for each asset based upon a desired level of detail (LOD) which has been determined for that asset. Such a process is optional, particularly where the content executing device has a large amount of local storage, but can be implemented to balance level of detail with memory constraints and prioritising which assets are obtained first. It may also be preferred that the level of detail of a set of assets is managed so as to reduce a processing burden upon the local device when rendering said assets.

A step 500 comprises generating asset priority values for each asset to be used, or at least a subset based upon the basic assets already stored at a content execution device or an image frame currently being rendered. The priority values are assigned on a per-LOD basis for LODs other than the basic level obtained in advance by the content executing unit. This priority is based upon the desired level of detail for that asset. This generates a list which comprises entries assigning a priority value to each available LODs for each of the assets.

While the specific manner of assigning a priority value can be determined freely as an implementation detail, in an exemplary implementation the priority value for an LOD is equivalent to the level of the LOD (with level 0 being the top-level asset, and each sub-level asset being assigned a number one greater than the previous level such that the LOD level increases with decreasing detail) minus the desired LOD level, plus some bias factor. This bias factor can cause some LODs amongst those available to be preferentially obtained. In an example implementation, the bias value for levels 0 and 1 may be -2, for levels 2-4 it is -1, and for all other levels the bias is 0. In this manner, the priority level for lower LODs can be inflated to reflect that they are the highest priority LODs for upgrade.

In some cases it may be considered appropriate to cull LODs from the list based upon a threshold priority value; for instance, LODs with a priority value of -2 or lower could be culled so as to increase the efficiency of the process by reducing the number of entries to consider. Such assets represent those which exceed the desired level of detail by a predefined amount, should the desired level of detail not be the highest level.

A step 510 comprises sorting the asset LODs by their priority value, whereby the LODs having the largest positive priority values are processed first. If two LODs have an equivalent priority value, then any suitable metric may be used to cause them to be processed in a consistent manner - for instance, selecting based upon memory address or other characteristics such as alphabetical order based upon the asset name. Should two LODs for the same asset be the same, for instance due to bias values being selected in a manner which causes this, then a higher or lower LOD may appear earlier in the list as desired for a given implementation (either to favour lower memory usage or higher asset quality, respectively).

A step 520 comprises generating a target asset working set; based upon the total memory capacity available to a game (that is, the total storage space at a device, rather than the unallocated space currently available), the process iterates through the sorted set of LODs for an asset to determine the amount of memory that each LOD would require. If an LOD would fit in the local memory, then this LOD is stored as the target LOD in the target asset working set; should a lower-priority asset (typically higher-quality) also fit, then the earlier LOD can be overwritten in the target asset working set. In some instances it may be considered preferable to use a portion of the local memory as the threshold rather than the total memory capacity; this can reduce the likelihood of a single very large texture occupying a large proportion of the available memory or the asset upgrade being skipped in a later step due to the target LOD occupying more than the currently available storage space.

A step 530 comprises sorting the target asset working set by priority values associated with each asset based upon the identified target LOD in the target asset working set of step 520. A priority value for an asset can be identified in any suitable manner; in some implementations, it is considered appropriate to determine the priority as the target LOD minus the current LOD at the content executing device, plus a bias value based upon the target LOD. The bias values may be the same as those used in step 500, or may be defined separately. In this step, the sorting is performed such that lowest values are higher in the list - that is, larger negative values take priority over other values. This priority value would therefore favour those assets which have the largest discrepancy between current and target LODs - although this may be adjusted through use of a different priority calculation as desired.

A step 540 comprises iterating through the sorted target asset working set of step 530 and, where there is available local storage capacity, perform an upgrade step comprising obtaining the corresponding LOD. If there is not sufficient storage, then the LOD is skipped and the next item on the list is considered. In some implementations rather than considering the total available local storage capacity, a percentage or proportion of the available capacity may be considered. This may be advantageous in that a greater number of asset upgrades may be performed, at the expense of those upgrades which could use a disproportionate amount of storage.

A step 550 comprises iterating through the sorted target asset working set of step 530 and downgrading assets where this is requested (that is, when the target LOD is lower than the currently-stored LOD delete the currently-stored LOD and obtain the target LOD). This therefore reduces the burden upon the local storage, as smaller files are obtained to replace larger files. Optionally, this may be performed simultaneously with step 540, such that the list is only traversed once, or may be performed prior to step 540 so as to maximise the amount of available local storage capacity prior to the upgrade step.

Upgrade/downgrade actions can be processed as an asynchronous command buffer, with commands being issued to map/unmap virtual memory to physical memory for those assets being upgraded or downgraded. The mapping must be performed before the asset can be read from memory, and as such the file read command buffer will wait for the memory map operation to be completed before reading data relating to the asset.

Figure 5 therefore provides an example of a method by which a target LOD can be obtained in the case in which the desired LOD is not appropriate due to memory constraints. Of course, such a process is not required in order to implement processes according to the present disclosure; for instance, a simplified approach in which desired LODs are assessed for size and then optionally requested based upon how much of the local storage they would occupy could be used to streamline the process.

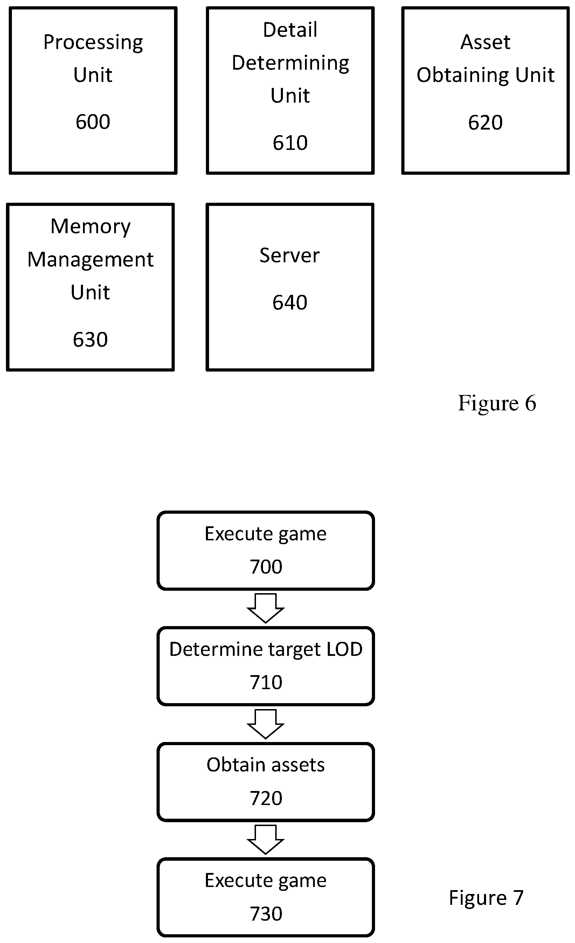

Figure 6 schematically illustrates a system for executing a video game in accordance with the features described above. This system comprises a processing unit 600 (for instance, a combination of one or more CPUs and/or GPUs), a detail determining unit 610, an asset obtaining unit 620, an optional memory management unit 630, and a server 640 from which content is obtained. While described in a more concise manner below, it is considered that this system can be used to implement any of the features which have been described within this disclosure, such as the steps described with reference to Figures 3-5.

The processing unit 600 is configured to execute the video game (on a device local to the user of the game) on the basis of executable code and a first package of assets, the first package of assets comprising a plurality of assets for the video game at a first level of detail. This first package of assets may be the basic asset package or initial set of assets as described above, for example. These may be obtained together by the local processing device, or the executable code may comprise assets only for rendering a game loading screen and/or menu, and comprise instructions for obtaining the first package of assets separately to the obtaining of the executable code (in some cases, from a different location from that which the executable code was obtained).

The first package of assets may comprise assets for a predefined portion of the game rather than the entirety of the game; this may be a particular game level, series of events, and/or a geographic region within the game. The first package of assets may also comprise assets having different respective first levels of detail; in other words, the level of detail need not be the same for all assets, with some assets being provided at a higher quality than others in the first package. Assets may include any one or more of textures, meshes, bounding volume hierarchies, images, videos, and/or audio assets that are to be used within the video game.

The detail determining unit 610 is configured to determine, in dependence upon a first image frame of the video game rendered by the processing unit, a target level of detail for one or more assets in the first package of assets. Of course, 'first image frame' here does not necessarily mean the first image frame that is rendered by the game, but instead any image frame. The use of the term 'first' is intended only to differentiate this image frame from those referenced later in the process (that is, those rendered using obtained assets instead of only the first package of assets).

The detail determining unit 610 may be configured to determine a target level of detail for an asset in dependence upon the display size of the asset, the motion associated with the asset, and/or the context in which the asset appears. These are exemplary options, rather than limiting, and it is considered that any suitable approach to determining a target level of detail can be utilised. In some implementations, a GPU may be configured to identify a preferred LOD and this output can be used to determine the target level of detail.

While in some cases the target level of detail is simply the desired level of detail described above, in some cases the target level of detail may differ from this due to local memory or processing constraints; in this case, any suitable method for determining a target level of detail from the desired level of detail may be utilised. One example of such a method is that described with reference to Figure 5 above.

The assets for which the target level of detail is identified may be those which are displayed in the image frame, or assets associated with those which are displayed (such as if a locked door is displayed, then it can be inferred that a corresponding key is likely to be shown in a prominent fashion).

The asset obtaining unit 620 is configured to obtain one or more assets at a second level of detail in dependence upon the determined target level of detail for respective assets, with the second level of detail being higher than the first level of detail. This is performed on a per-asset basis, such that the level of detail of individual assets can be upgraded. The asset obtaining unit 620 is configured to obtain assets from the server 640, which may be implemented in any suitable fashion for distributing assets in accordance with the present disclosure.

Once the asset obtaining unit 620 has obtained these assets, the processing unit 600 is configured to execute the video game using the obtained assets instead of the corresponding assets in the first package of assets when rendering image frames following the first image frame.

In line with the discussion above, this may be an iterative process such that the detail determining unit 610 may be configured, in dependence upon one or more of the image frames following the first image frame, to determine a second target level of detail for one or more assets and the asset obtaining unit 630 is correspondingly configured to obtain one or more assets at a third level of detail in dependence upon the determined second target level of detail. This may represent an upgrade of other assets in the first package of assets, for example, or an upgrade or downgrade of a previously obtained asset; if an obtained asset corresponds to an asset for which a second level of detail has been obtained, the obtained asset replaces the asset having the second level of detail.

Obtained assets may be deleted from a local storage device when execution of the video game is terminated, or when a particular portion of the video game has ended (such as when a user moves to a new level or area). Upon moving to a new stage or portion of a game (that is, one to which the first package does not correspond) a second package of assets is able to be obtained which provides a second plurality of assets at respective first levels of detail. This may be performed during a loading screen, for example, or when a user approaches the end of a portion so as to anticipate the need for the second asset package. The assets in this second plurality can then be upgraded as appropriate in accordance with the process already described.

An optional memory management unit 630 may also be provided, with this unit being configured to manage a virtual address space. In such a case the executable code is configured to reference virtual addresses in the virtual address space, and the memory management unit 630 is configured to map these to physical memory addresses within a local storage device. The use of this virtual address space is described above.

The server 640 is provided separately to the other units, which are provided at a local processing device such as a games console (referred to as a content executing unit elsewhere in the description); this may be the client device 200 of Figure 2 and/or the entertainment system of Figure 1. The server 640 may be any server arrangement (such as a plurality of content servers and/or edge servers) configured to distribute assets to the content executing unit. The server 640 may also be the source of the executable code, however this may be obtained from another source such as an online store separate to the server 640 or via physical storage media such as a disk.

The arrangement of Figure 6 is an example of a processor (for example, a GPU and/or CPU located in a games console or any other computing device) that is operable to execute a video game, and a server, and in particular is operable to:
execute the video game on the basis of executable code and a first package of assets, the first package of assets comprising a plurality of assets for the video game at a first level of detail;
determine, in dependence upon a first rendered image frame of the video game, a target level of detail for one or more assets in the first package of assets;
obtain one or more assets at a second level of detail in dependence upon the determined target level of detail for respective assets; and
execute the video game using the obtained assets instead of the corresponding assets in the first package of assets when rendering image frames following the first image frame.

As described above, this functionality may be realised by the entertainment system of Figure 1, which performs processing using a combination of the CPU 20 and GPU 30.

Figure 7 schematically illustrates a method for executing a video game; this method may be implemented by the system of Figure 6, with the steps below being implemented in accordance with any of the details described elsewhere in this disclosure.

A step 700 comprises executing the video game on the basis of executable code and a first package of assets, the first package of assets comprising a plurality of assets for the video game at a first level of detail.

A step 710 comprises determining, in dependence upon a first image frame of the video game rendered by the processing unit, a target level of detail for one or more assets in the first package of assets.

A step 720 comprises obtaining one or more assets at a second level of detail in dependence upon the determined target level of detail for respective assets.

A step 730 comprises executing the video game using the obtained assets instead of the corresponding assets in the first package of assets when rendering image frames following the first image frame.

The techniques described above may be implemented in hardware, software or combinations of the two. In the case that a software-controlled data processing apparatus is employed to implement one or more features of the embodiments, it will be appreciated that such software, and a storage or transmission medium such as a non-transitory machine-readable storage medium by which such software is provided, are also considered as embodiments of the disclosure.

Thus, the foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

### EMBODIMENTS

Although the present invention is defined in the claims, it should be understood that the present invention can also (alternatively) be defined in accordance with the following embodiments:
1. A system for executing a video game, the system comprising:
   a processing unit configured to execute the video game on the basis of executable code and a first package of assets, the first package of assets comprising a plurality of assets for the video game at a first level of detail;
   a detail determining unit configured to determine, in dependence upon a first image frame of the video game rendered by the processing unit, a target level of detail for one or more assets in the first package of assets; and
   an asset obtaining unit configured to obtain one or more assets at a second level of detail in dependence upon the determined target level of detail for respective assets,
   wherein the processing unit is configured to execute the video game using the obtained assets instead of the corresponding assets in the first package of assets when rendering image frames following the first image frame.
2. A system according to embodiment 1, wherein the first package of assets comprises assets having different respective first levels of detail.
3. A system according to any preceding embodiment, wherein the first package of assets comprises assets for a predefined portion of the video game.
4. A system according to embodiment 3, wherein the predefined portion corresponds to a game level, a series of events, and/or a geographic region within the video game.
5. A system according to any preceding embodiment, wherein the executable code comprises assets only for rendering a video game loading screen and/or menu, and comprises instructions for obtaining the first package of assets separately to the obtaining of the executable code.
6. A system according to any preceding embodiment, wherein the assets comprise one or more textures, meshes, bounding volume hierarchies, images, videos, and/or audio assets.
7. A system according to any preceding embodiment, wherein the detail determining unit is configured to determine a target level of detail for an asset in dependence upon the display size of the asset, the motion associated with the asset, and/or the context in which the asset appears.
8. A system according to any preceding embodiment, comprising a memory management unit configured to manage a virtual address space, wherein the executable code references virtual addresses in the virtual address space and the memory management unit maps these to physical memory addresses within a local storage device.
9. A system according to any preceding embodiment, wherein the asset obtaining unit is configured to preferentially obtain assets in dependence upon a difference in the first and second levels of detail.
10. A system according to any preceding embodiment, wherein, the detail determining unit is configured, in dependence upon one or more of the image frames following the first image frame, to determine a second target level of detail for one or more assets and the asset obtaining unit is configured to obtain one or more assets at a third level of detail in dependence upon the determined second target level of detail.
11. A system according to embodiment 10, wherein, if an obtained asset corresponds to an asset for which a second level of detail has been obtained, the obtained asset replaces the asset having the second level of detail.
12. A system according to any preceding embodiment, wherein obtained assets are deleted from a local storage device when execution of the video game is terminated.
13. A method for executing a video game, the method comprising:
   executing the video game on the basis of executable code and a first package of assets, the first package of assets comprising a plurality of assets for the video game at a first level of detail;
   determining, in dependence upon a first image frame of the video game rendered by the processing unit, a target level of detail for one or more assets in the first package of assets;
   obtaining one or more assets at a second level of detail in dependence upon the determined target level of detail for respective assets; and
   executing the video game using the obtained assets instead of the corresponding assets in the first package of assets when rendering image frames following the first image frame.
14. Computer software comprising instructions which, when the software is executed by a computer, causes the computer to carry out the method of embodiment 13.
15. A non-transitory machine-readable storage medium which stores computer software according to embodiment 14.

## Claims

1. A system for executing a video game, the system comprising:
a processing unit (600) configured to execute the video game on the basis of executable code and a first package of assets, the first package of assets comprising a plurality of assets for the video game at a first level of detail;
a detail determining unit (610) configured to determine, in dependence upon a first image frame of the video game rendered by the processing unit (600), a target level of detail for one or more assets in the first package of assets; and
an asset obtaining unit (620) configured to obtain one or more assets at a second level of detail in dependence upon the determined target level of detail for respective assets,
wherein the processing unit (600) is configured to execute the video game using the obtained assets at the second level of detail instead of the corresponding assets in the first package of assets when rendering image frames following the first image frame.

2. A system according to claim 1, wherein the first package of assets comprises assets having different respective first levels of detail.

3. A system according to any preceding claim, wherein the first package of assets comprises assets for a predefined portion of the video game.

4. A system according to claim 3, wherein the predefined portion corresponds to a game level, a series of events, and/or a geographic region within the video game.

5. A system according to any preceding claim, wherein the executable code comprises assets only for rendering a video game loading screen and/or menu, and comprises instructions for obtaining the first package of assets separately to the obtaining of the executable code.

6. A system according to any preceding claim, wherein the assets comprise one or more textures, meshes, bounding volume hierarchies, images, videos, and/or audio assets.

7. A system according to any preceding claim, wherein the detail determining unit (610) is configured to determine a target level of detail for an asset in dependence upon a display size of the asset, a motion associated with the asset, and/or a context in which the asset appears.

8. A system according to any preceding claim, comprising a memory management unit (630) configured to manage a virtual address space, wherein the executable code references virtual addresses in the virtual address space and the memory management unit (630) maps these to physical memory addresses within a local storage device.

9. A system according to any preceding claim, wherein the asset obtaining unit (620) is configured to preferentially obtain assets in dependence upon a difference in the first and second levels of detail.

10. A system according to any preceding claim, wherein, the detail determining unit (610) is configured, in dependence upon one or more of the image frames following the first image frame, to determine a second target level of detail for one or more assets and the asset obtaining unit is configured to obtain one or more assets at a third level of detail in dependence upon the determined second target level of detail.

11. A system according to claim 10, wherein, if an obtained asset corresponds to an asset for which a second level of detail has been obtained, the obtained asset replaces the asset having the second level of detail.

12. A system according to any preceding claim, wherein obtained assets are deleted from a local storage device when execution of the video game is terminated.

13. A method for executing a video game, the method comprising:
executing (700) the video game on the basis of executable code and a first package of assets, the first package of assets comprising a plurality of assets for the video game at a first level of detail;
determining (710), in dependence upon a first image frame of the video game rendered by a processing unit, a target level of detail for one or more assets in the first package of assets;
obtaining (720) one or more assets at a second level of detail in dependence upon the determined target level of detail for respective assets; and
executing (730) the video game using the obtained assets at a second level of detail instead of the corresponding assets in the first package of assets when rendering image frames following the first image frame.

14. Computer software comprising instructions which, when the software is executed by a computer, causes the computer to carry out the method of claim 13.

15. A non-transitory machine-readable storage medium which stores computer software according to claim 14.
